# EUROPEAN PATENT APPLICATION

(11) **EP 4 745 802 A1**
(43) Date of publication of application: **20.05.2026**
(21) Application number: 24838802.7
(22) Date of filing: 09.07.2024
(51) Int. Cl.: G06F 16/955, G06F 21/36

(54) **LOGIN METHOD AND APPARATUS, AND ELECTRONIC DEVICE**

(30) Priority: 10.07.2023 CN 202310842804
(71) Applicant: Beijing Zitiao Network Technology Co., Ltd., Beijing 100190 (CN); Douyin Vision Co., Ltd., Beijing 100041 (CN)
(72) Inventor: ZHANG, Zeqian, Beijing 100028 (CN); WANG, Jiangong, Beijing 100028 (CN)
(74) Representative: Grünecker Patent- und Rechtsanwälte PartG mbB
(86) International application number: PCT/CN2024/104460
(87) International publication number: WO 2025/011550

(57) **Abstract**

Disclosed in the embodiments of the present disclosure are a login method and apparatus, and an electronic device. A specific implementation of the method includes: presenting a login control and demonstration content, wherein the demonstration content is used for demonstrating a login operation corresponding to the login control, and the demonstration content at least matches an image which is displayed when an operation is performed on the login control by using an auxiliary device; and performing, based on an operation on the login control, an operation result of the operation. Thus, a new login mode is provided.

## Description

### CROSS-REFERENCE TO RELATED APPLICATIONS

This application claims priority to Chinese Patent Application No. 202310842804.5 entitled "LOGIN METHOD AND APPARATUS, AND ELECTRONIC DEVICE", and filed on July 10, 2023, the disclosure of which is hereby incorporated by reference in its entirety.

### TECHNICAL FIELD

The present disclosure relates to the field of computer technologies, and in particular, to a login method and apparatus, and an electronic device.

### BACKGROUND

With the development of computers, users can implement various functions using electronic devices.

In some scenarios, a user may log into an application or webpage, to experience corresponding functions. For example, a user may log into a video playback application to watch a video.

### SUMMARY

This summary section is provided to introduce concepts in a simplified form that will be described in detail below in the detailed description. This summary section is not intended to identify key features or essential features of the claimed subject matter, nor is it intended to limit the scope of the claimed subject matter.

In a first aspect, an embodiment of the present disclosure provides a login method, including: presenting a login control and demonstration content, where the demonstration content is used for demonstrating a login operation corresponding to the login control, and the demonstration content at least matches an image which is displayed when an operation is performed on the login control by using an auxiliary device; and performing, based on an operation on the login control, an operation result of the operation.

In a second aspect, an embodiment of the present disclosure provides a login apparatus, including: a presenting unit configured to present a login control and demonstration content, where the demonstration content is used for demonstrating a login operation corresponding to the login control, and the demonstration content at least matches an image which is displayed when an operation is performed on the login control by using an auxiliary device; and a performing unit configured to perform, based on an operation on the login control, an operation result of the operation.

In a third aspect, an embodiment of the present disclosure provides an electronic device, including: one or more processors; a storage configured to store one or more programs which, when executed by the one or more processors, cause the one or more processors to implement the login method according to the first aspect.

In a fourth aspect, an embodiment of the present disclosure provides a computer-readable medium having stored thereon a computer program which, when executed by a processor, implements the steps of the login method according to the first aspect.

In a fifth aspect, an embodiment of the present disclosure provides a computer program product including a computer program which, when executed by a processor, implements the method according to the first aspect.

In a sixth aspect, an embodiment of the present disclosure provides a computer program which, when executed by a processor, implements the method according to the first aspect.

### BRIEF DESCRIPTION OF THE DRAWINGS

The above and other features, advantages, and aspects of the embodiments of the present disclosure will become more apparent by referring to the following detailed description when taken in conjunction with the accompanying drawings. Throughout the drawings, the same or similar reference numbers refer to the same or similar elements. It should be understood that the drawings are schematic and that elements and components are not necessarily drawn to scale.
FIG. 1 is a flow diagram of a login method according to some embodiments of the present disclosure;
FIGS. 2A and 2B are schematic diagrams of an application scenario of a login method according to the present disclosure;
FIGS. 3A and 3B are schematic diagrams of an application scenario of a login method according to the present disclosure;
FIGS. 4A and 4B are schematic diagrams of an application scenario of a login method according to the present disclosure;
FIG. 5 is a schematic block diagram of a login apparatus according to some embodiments of the present disclosure;
FIG. 6 is an exemplary system architecture to which the login method of some embodiments of the present disclosure may be applied; and
FIG. 7 is a schematic diagram of a basic structure of an electronic device provided according to an embodiment of the present disclosure.

### DETAILED DESCRIPTION

The embodiments of the present disclosure will be described in more detail below with reference to the accompanying drawings. While certain embodiments of the present disclosure are shown in the drawings, it should be understood that the present disclosure may be embodied in various forms and should not be construed as limited to the embodiments set forth herein, but rather are provided for a more complete and thorough understanding of the present disclosure. It should be understood that the drawings and the embodiments of the disclosure are for illustration purposes only and are not intended to limit the scope of the disclosure.

It should be understood that the various steps recited in the method embodiments of the present disclosure may be performed in a different order, and/or performed in parallel. Moreover, the method embodiments may include additional steps and/or omit performing the illustrated steps. The scope of the present disclosure is not limited in this respect.

The term "including" and variations thereof as used herein is intended to be open-ended, i.e., "including but not limited to". The term "based on" is "based at least in part on". The term "one embodiment" means "at least one embodiment"; the term "another embodiment" means "at least one additional embodiment"; the term "some embodiments" means "at least some embodiments". Relevant definitions for other terms will be given in the following description.

It should be noted that the terms "first", "second", and the like in the present disclosure are only used for distinguishing different devices, modules or units, and are not used for limiting the order or interdependence of the functions performed by the devices, modules or units.

It is noted that references to "a" or "plurality" in this disclosure are intended to be illustrative rather than limiting, and that those skilled in the art will appreciate that they should be understood as "one or more" unless the context clearly indicates otherwise.

The names of messages or information exchanged between devices in the embodiments of the present disclosure are for illustrative purposes only, and are not intended to limit the scope of the messages or information.

In some scenarios, a user may log into an application or webpage, to experience corresponding functions. For example, a user may log into a video playback application to watch a video. However, the existing login modes are inefficient and influence user experience. The present disclosure thus proposes an improved login method.

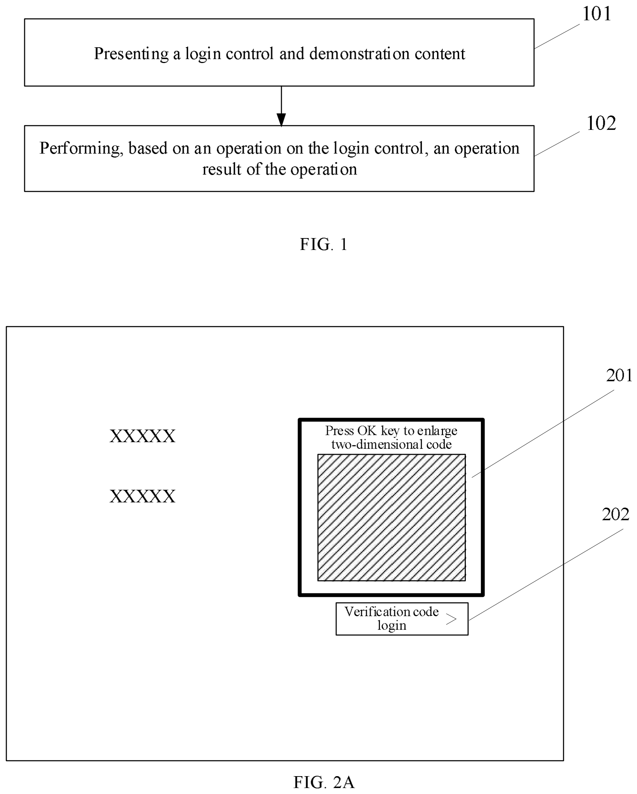

Referring to FIG. 1, a flow diagram of a login method according to some embodiments of the present disclosure is shown. The login method as shown in FIG. 1 includes the following steps:
step 101, presenting a login control and demonstration content.

In this embodiment, a performing subject (e.g., a server and/or a terminal device) of the login method may present a login control and demonstration content.

Here, the login control may be used for login. A specific form of the login control may correspond to a login mode to which the login control corresponds.

As an example, if the login control corresponds to a scan login mode, the login control refers to an image identification to be scanned.

As an example, if the login control corresponds to a verification code login mode, the login control may refer to a control that receives a verification code.

Here, the demonstration content may be used to demonstrate a login operation corresponding to the login control. The operation corresponding to the login may include an operation flow required to complete the login.

Here, the demonstration content may include, but is not limited to, at least one type of information: text, image, animation, or sound. The animation may include GIF animation.

Here, the demonstration content matches at least an image which is displayed when an operation is performed on the login control by using an auxiliary device. The match may include consistency or similarity.

Here, the auxiliary device may be a device that needs to receive information during login, and the device may assist in login. For example, the auxiliary device is required for scanning during scan login. For another example, the auxiliary device is required for receiving a verification code during verification code login.

Step 102, performing, based on an operation on the login control, an operation result of the operation.

Of course, an actual operation of the user may or may not be consistent with the operation indicated by the demonstration content. In the case of being consistent, reference is also made to whether login information used by the login user has permission to log into a specified application or interface. By judging these conditions, an operation result of the actual operation of the user, such as login success or login failure, can be performed.

As an example, if the manner of the actual operation of the user is correct, and the login information is correct, the performed operation result may include login success.

As an example, if the manner of the actual operation of the user is incorrect, the performed operation result of the operation may include login failure.

As an example, if the manner of operating user login entry information is correct, but the used login information does not have login permission, the performed operation result of the operation may include login failure. Of course, if the manner of the user login operation and the used operation information are both wrong, the performed operation result is also operation failure.

It should be noted that, the login mode provided in this embodiment is described in the form of demonstration content, so that the process of the login operation can be visually displayed to the user, facilitating fast login of the user by simulating the operation process presented by the demonstration content.

In contrast, in some related arts, the login modes are costly in understanding, for example, the user does not know how to scan code, does not know where a code scanning entry of a mobile terminal is, how to input a phone number, and the like. These problems hinder user login.

In some embodiments, the method may further include: presenting login entry information.

Here, the login entry information may be used to direct the user to log in. The login entry information corresponds to the login control.

Optionally, the type of the login entry information may be various, for example, an entry for scanning a preset two-dimensional code, or an entry for login by using a verification code, or an entry for login by using a mailbox.

In some embodiments, the login entry information may be presented simultaneously with other information, such as some promotional information.

In some embodiments, the login entry information may include a login control. For example, the login entry information may include an image identification to be scanned.

In some embodiments, the login entry information may be presented on a larger screen, such as a television screen, a projection screen, a computer screen, or the like. The login entry information presented on some large screens may be inconvenient for the user to operate through a touch screen, so that another auxiliary device is required for auxiliary operation. The auxiliary device may be, for example, a remote control or a portable electronic device (e.g., a mobile phone).

Here, the form of the login entry may be various, for example, the information type of the login entry may include at least one of, but is not limited to: text, image, or animation.

Here, the step 102 may include: presenting the login control and the demonstration content corresponding to the login entry information, in response to a selection operation on the login entry information.

Here, the selection operation may be a selected operation on the login entry information. For example, pressing a confirmation key on a remote control.

In some scenarios, based on a different login mode of a television end, after the different login mode is selected, a page corresponding to the login mode is entered through an "OK" key on the television remote control, in which a login control and demonstration content are simultaneously presented.

It should be noted that, after the user selects the login entry information, corresponding demonstration content may be presented, so that the user may reduce the understanding cost of the login mode, facilitating the user to operate for fast login.

In some embodiments, the demonstration content may be in loop playback.

Here, the demonstration content may be in loop playback. The loop playback may refer to that a new round of playback is automatically started after one round of playback is finished, facilitating the user to understand the login operation by watching the demonstration content for many times, if without understanding.

In some embodiments, if the login mode corresponding to the login control is scan login, the demonstration content is used for demonstrating a process of triggering a scan login operation based on the login control. In other words, the demonstration content may include a process of triggering a scan operation in a target application interface.

Here, the target application may be an application capable of scanning an image identification. The target application interface may be an interface in the target application that includes the scan control described above.

Here, the scan login may include a manner of scanning an image identification for login. If the login mode indicated by the login control is scan login, then demonstration content included in the above demonstration content may include an image of the target application interface and an image of the scan control. The demonstration content may include a process of opening an interface in the target application that includes a scan control and triggering the scan control to scan.

In some application scenarios, an image identification presented on a screen of a first device shall be scanned on a second device, where the second device may include, for example, a portable device (e.g., a mobile phone) or a remote control. In the second device, a wide variety of applications may be installed, then the user may be questionable which application is used for scanning.

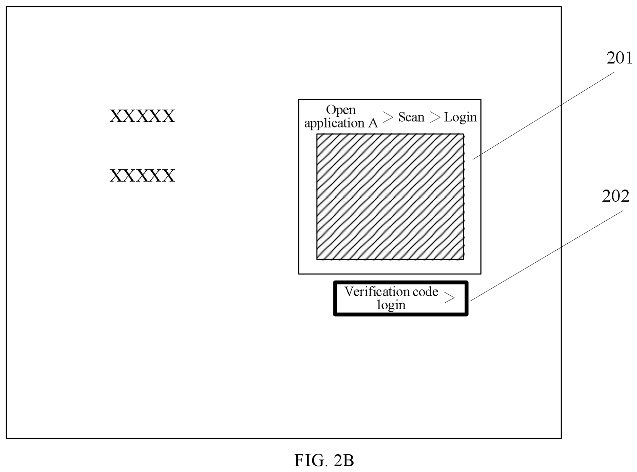

As an example, please refer to FIGS. 2A and 2B. An interface presented with two types of login entry information is shown in FIGS. 2A and 2B. The login mode corresponding to first login entry information 201 is scan login. The login mode corresponding to second login entry information 202 is verification code login.

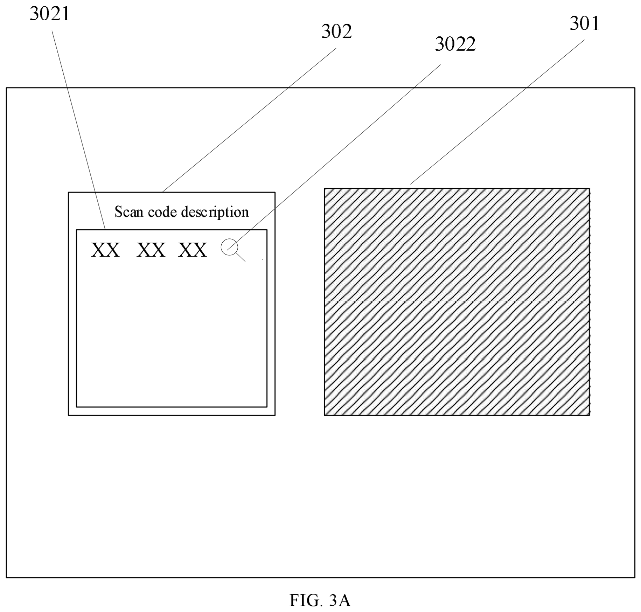

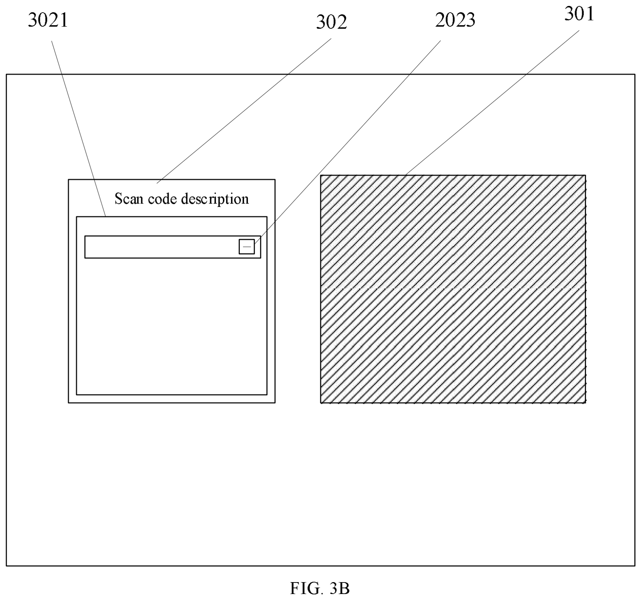

As an example, reference may be made to FIGS. 3A and 3B. In FIGS. 3A and 3B, image identification 301 may refer to an image identification (e.g., a two-dimensional code or a barcode) to be scanned. Login mode description 302 may include words, i.e., scan code description, and may further include a demonstration content area 3021. GIF animation may be presented in the demonstration content area 3021.

An A-interface for a first application is presented in the demonstration content area 3021 of FIG. 3A, and the A-interface may include a search control 3022 which may be enlarged for presentation, to direct the user to trigger the search control. The user triggers the search control, and a B-interface may be presented, in which a scan control may be included, that is, a scan control 3023 may be presented in the demonstration content area 3021 of FIG. 3B, and the scan control is enlarged to direct the user to trigger the scan control.

It should be noted that, during the scan login, in the corresponding demonstration content, an application used for scanning code and a position where the scan control is located are presented in the form of demonstration content, so that the user can be explicitly guided how to open the target application and scan code in the application. Therefore, the login can be completed quickly by scanning code.

In some embodiments, if the login mode corresponding to the login control is verification code login, the demonstration content may be used to demonstrate a process of performing a verification code login operation based on the login control. In other words, the demonstration content is used to demonstrate a process of presenting a verification code in a target application and entering the verification code in the login control.

Here, the target application may be an application capable of receiving the verification code. The target application interface may be an interface in the target application that presents the verification code.

Here, the verification code login may include a manner of entering a verification code for login. If the login mode corresponding to the login control is verification code login, the demonstration content may include a process of receiving a notification of the verification code in the target application, and may further include a process of filling the verification code into the presented login control.

In some application scenarios, a verification code login control is presented on a screen of a first device, and a verification code needs to be received at a second device, where the second device may include, for example, a portable device (e.g., a mobile phone) or a remote control. In the second device, a wide variety of applications may be installed, and the user may be questionable which application is used for receiving the verification code.

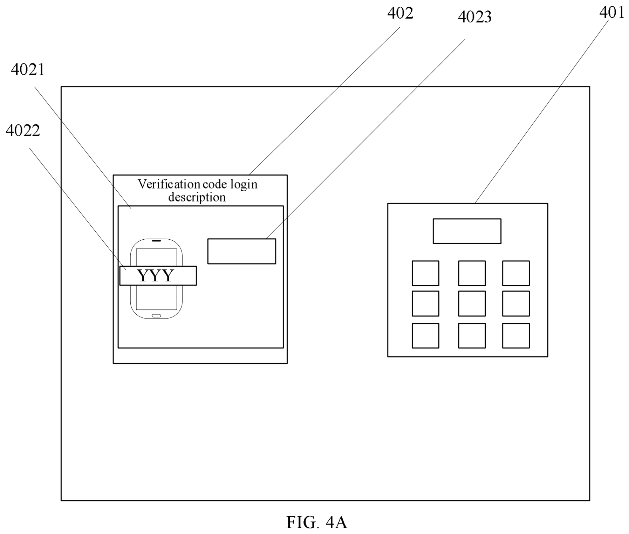

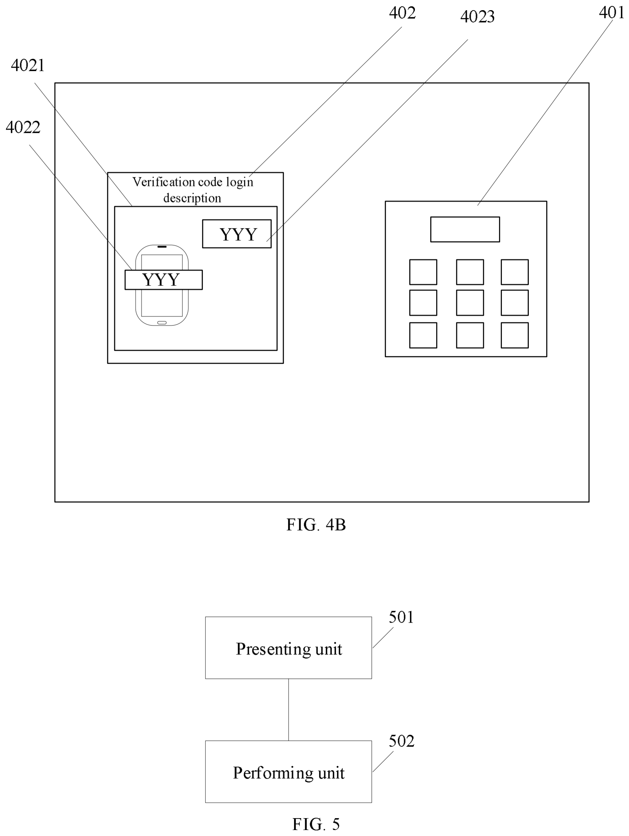

As an example, reference may be made to FIGS. 4A and 4B. In FIGS. 4A and 4B, a validation code reception control 401 may be presented. Login mode description 402 may include words, i.e., verification code login description. The login mode description 402 may further include a demonstration content area 4021. GIF animation may be presented in the demonstration content area 4021.

A notification interface 4022 for a second application is presented in the demonstration content area 4021 of FIG. 4A, in which a verification code YYY is presented. A verification code reception control image 4023 may be presented in the demonstration content area 4021 of FIG. 4A. In the demonstration content area 4021 of FIG. 4B, the verification code YYY may be entered in the verification code reception control image 4023.

It should be noted that, during the verification code login, the application for receiving the verification code and the process of entering the verification code into the verification code control are presented in the form of demonstration content, so that the user can be explicitly guided how to quickly obtain the correct verification code and how to fill the verification code into the correct verification code reception control. Therefore, the login can be completed quickly through the verification code.

In some embodiments, the login entry information is presented on a first interface. The step of presenting the login control and the demonstration content in response to a selection operation on the login entry information may include: presenting the login control and the demonstration content on a second interface.

In other words, the second interface includes the login control and the demonstration content.

Here, the second interface may be an interface with respect to the first interface presenting the login entry information, the first interface presenting the login entry information may be referred to as a primary interface, and then the second interface presented in response to the selection operation may be referred to as a secondary interface. Presenting the login control and the demonstration content in the second interface may make the user explicitly aware of the operation mode of the selected login control.

In some application scenarios, the first interface for presenting the login entry information may include other kinds of information, such as information describing what is viewed after login. In the primary interface, a blank interface is smaller in size.

In the implementation, it is skipped to present a new interface, such as the second interface, so that the login control and the demonstration content can be presented in an interface which is set purely for the login control and the demonstration content, and the login control and the demonstration content can be clearly presented due to a larger interface size and simpler interface content. Therefore, the understanding degree of the login user for the demonstration content and the convenience degree of operating the login control are improved.

In some embodiments, the login entry information includes an image identification to be scanned. The image identification can be understood here as a login control.

In some embodiments, the method further includes: switching a presentation mode of the image identification in response to the selection operation on the login entry information. It can be understood that, in response to the selection operation on the login entry information, the corresponding login control, here the image identification, may be triggered for presentation.

Here, an interface size occupied by the image identification after switching is larger than an interface size occupied by the image identification before switching.

As an example, please refer to FIGS. 2A and 3A. In FIG. 2A, an interface focus is shifted to the image identification to be scanned, and the interface size occupied by the image identification to be scanned is a first parameter value. After the user presses the OK key in FIG. 2A, FIG. 3A may present the image identification after the presentation state is switched. The interface size occupied by the image identification in FIG. 3A is a second parameter value. The first parameter value is less than the second parameter value.

In other words, when the selection operation is not performed, the interface size occupied by the image identification in the login entry information is small. After the selection operation is performed, the interface size occupied by the image identification as the login control is large. Therefore, the user can conveniently operate the login control.

In some embodiments, the method further includes: presenting first prompt information in response to selecting the login entry information.

Here, an interface focus may be shifted from other controls to the login entry information.

Here, the first prompt information is used to prompt that performing a selection operation on first login entry information can trigger switching of a presentation state of the image identification.

Here, if the interface focus is on the login entry information, the first prompt information may be presented, which may be used to prompt: if the selection operation is performed on the first login information, the presentation state of the first login entry information can be switched, for example, the image identification to be scanned becomes large.

As an example, referring to FIG. 2A, the words "press OK key can enlarge two-dimensional code" in FIG. 2A, can be understood as the first prompt information. That is, if the user triggers the login entry information in FIG. 2A, the presentation state of the image identification may be changed.

It should be noted that, when the login entry information is selected, the user may desire to trigger the login control corresponding to the login entry information. Then presenting the first prompt information at this time can effectively remind the user of how to operate the first login entry message, to conveniently operate the login control.

Optionally, when the interface focus is not on the login entry information, a second prompt message may be presented, so that the user may, directed by the second prompt message, shift the interface focus onto the first login entry information.

As an example, referring to FIG. 2B, when the interface focus is not on the first login entry, the second prompt message indicates a path prompt for scanning, e.g., opening an application A, then scanning, and then logging in.

Therefore, different prompt messages can be presented according to whether the interface focus is on the first login entry information, so that when the user does not desire to trigger the first login entry information, the user is directed to trigger the first login entry information; when the user desires to trigger the login entry information, how to trigger the login entry information quickly and conveniently is presented, increasing the login speed of the user.

In some embodiments, the step of presenting login entry information may include: presenting at least two login entry information. Different login entry information may correspond to different login modes.

Here, at least two login entry information indicate different login modes. As an example, first login entry information in at least one login entry information may indicate scan login. Second login entry information in the at least one login entry information may indicate verification code login.

In some scenarios, focus shift may be performed between respective login entry information (i.e., switching the login entry information in the selected state) through a focus shift operation.

As an example, if the interface focus is on the first login entry information, the user may perform a focus shift operation by pressing an up key or a down key on the remote control. The focus shift operation may shift the interface focus onto the second login entry information. If the user triggers a determination key, a second interface corresponding to the login entry information where the interface focus is located may be opened. That is, a determination operation triggered on the login entry information where the focus is located may be the selection operation in the step 102.

As an example, please refer to FIGS. 2A and 2B. FIG. 2A presents that the interface focus is on the login entry information corresponding to the scan login mode (please refer to the thicker box). FIG. 2B presents that the interface focus is on the login entry information corresponding to the verification code login mode (please refer to the thicker box).

It should be noted that, by providing multiple login entry information, various login modes can be realized, so that a user can conveniently select a proper login mode for login, improving the login speed.

In some embodiments, presenting the login control and the demonstration content in response to the selection operation on the login entry information includes: presenting, in response to a selection operation on the login entry information in the at least two login entry information, the login control and the demonstration content corresponding to the login entry information selected by the selection operation.

In some embodiments, presenting the login control and the demonstration content in response to the selection operation on the login entry information may include: presenting, in response to a selection operation on first login entry information in the at least two login entry information, an image identification to be scanned and corresponding demonstration content.

Here, the image identification may include a two-dimensional code pattern. The corresponding demonstration control may be used to demonstrate a process of triggering a scan operation in the target application interface.

As an example, please refer to FIG. 2A and FIG. 3A, the login entry information corresponding to the scan login in FIG. 2A is triggered. The interface corresponding to FIG. 3A may be presented. The image identification to be scanned and the corresponding demonstration content can be presented in the interface corresponding to FIG. 3A.

In some embodiments, presenting the login control and the demonstration content in response to the selection operation on the login entry information includes: presenting, in response to a selection operation on second login entry information in the at least two login entry information, a verification code control and corresponding demonstration content.

Here, the verification code control may be used to receive a verification code. The validation code control can include a user identification reception control and a validation code reception control.

In some application scenarios, the user identification reception control may be presented prior to presenting the validation code reception control. The user identification reception control can be used for receiving a user identification, such as a mobile phone number or a mailbox. The verification code may then be sent to the mobile phone number or mailbox. The user can receive the verification code by reading a short message corresponding to the mobile phone number or checking the mailbox. The validation code may then be filled into the validation code reception control.

As an example, for convenience of user operation, a keyboard pattern may be presented while the validation code reception control is presented. The user operates the remote control, then corresponding character keys displayed by the keyboard pattern are triggered, thereby realizing the entry of the verification code.

As an example, please refer to FIG. 2B and FIG. 4A, by triggering the login entry information corresponding to the verification code login in FIG. 2B, the interface corresponding to FIG. 4A may be presented. In the interface corresponding to FIG. 4A, a verification code control and corresponding demonstration content may be presented.

As an example, a notification interface 4022 for a second application is presented in a demonstration content area 4021 of FIG. 4A, in which a verification code YYY is presented. A verification code reception control image 4023 may be presented in the demonstration content area 4021 of FIG. 4A. In the demonstration content area 4021 of FIG. 4B, the verification code YYY may be entered in the verification code reception control image 4023.

With further reference to FIG. 5, as an implementation of the methods shown in the above-mentioned figures, the present disclosure provides some embodiments of a login apparatus, which correspond to the method embodiment shown in FIG. 1, and which can be specifically applied in various electronic devices.

As shown in FIG. 5, the login apparatus of the present embodiment includes: a presenting unit 501 and a performing unit 502. The presenting unit is configured to present a login control and demonstration content, where the demonstration content is used for demonstrating a login operation corresponding to the login control, and the demonstration content at least matches an image which is displayed when an operation is performed on the login control by using an auxiliary device; and the performing unit is configured to perform, based on an operation on the login control, an operation result of the operation.

In this embodiment, the detailed processing of the presenting unit 501 and the performing unit 502 of the login apparatus and the technical effects brought by the processing can refer to the related descriptions of the step 101 and step 102 in the corresponding embodiment of FIG. 1, which are not repeated herein.

In some embodiments, if a login mode corresponding to the login control is scan login, the demonstration content is used for demonstrating a process of triggering a scan login operation based on the login control.

In some embodiments, if a login mode corresponding to the login control is verification code login, the demonstration content is used for demonstrating a process of performing a verification code login operation based on the login control.

In some embodiments, the apparatus is further configured to: present login entry information, where the login entry information corresponds to the login control; and presenting the login control and the demonstration content includes: presenting the login control and the demonstration content in response to a selection operation on the login entry information.

In some embodiments, the login entry information is presented on a first interface; and presenting the login control and the demonstration content in response to the selection operation on the login entry information includes: presenting the login control and the demonstration content on a second interface in response to the selection operation on the login entry information.

In some embodiments, the login entry information includes an image identification to be scanned; and the method further includes: switching a presentation state of the image identification in response to the selection operation on the login entry information, where an interface size occupied by the image identification after the presentation state is switched is larger than an interface size occupied by the image identification before the presentation state is switched.

In some embodiments, presenting the login entry information includes: presenting at least two login entry information, different login entry information corresponding to different login modes; and presenting the login control and the demonstration content in response to the selection operation on the login entry information includes: presenting, in response to a selection operation of the login entry information in the at least two login entry information, the login control and the demonstration content corresponding to the login entry information selected by the selection operation.

In some embodiments, the method further includes: presenting first prompt information for the login entry information in response to an interface focus being shifted to the login entry information, where the first prompt information is used for prompting that performing a selection operation on first login entry information can trigger switching the presentation state of the image identification.

In some embodiments, presenting the login entry information includes: presenting at least two login entry information.

In some embodiments, presenting the login control and the demonstration content in response to the selection operation on the login entry information includes: presenting, in response to a selection operation on first login entry information in the at least two login entry information, the image identification to be scanned and corresponding demonstration content.

In some embodiments, presenting the login control and the demonstration content in response to the selection operation on the login entry information includes: presenting, in response to a selection operation on second login entry information in the at least two login entry information, a verification code control and corresponding demonstration content.

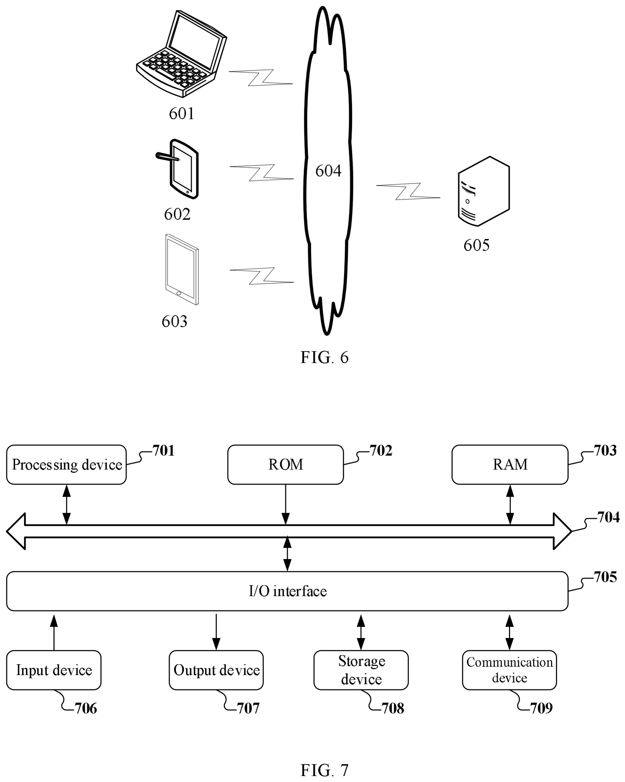

Refer to FIG. 6, which illustrates an exemplary system architecture to which the login method of some embodiments of the present disclosure may be applied.

As shown in FIG. 6, the system architecture may include terminal devices 601, 602, 603, a network 604, and a server 605. The network 604 serves as a medium for providing communication links between the terminal devices 601, 602, 603 and the server 605. The network 604 may include various types of connections, such as wired, wireless communication links, or fiber optic cables, or the like.

The terminal devices 601, 602, 603 may interact with the server 605 via the network 604 to receive or send messages or the like. The terminal devices 601, 602, 603 may have various client applications installed thereon, such as a webpage browser application, a search-type application, and a news-information-type application. The client applications in the terminal devices 601, 602, 603 may receive an instruction of the user, and complete a corresponding function according to the instruction of the user, for example, add corresponding information in the information according to the instruction of the user.

The terminal devices 601, 602, 603 may be hardware or software. When the terminal devices 601, 602, 603 are hardware, they may be various electronic devices having a display screen and supporting webpage browsing, including but not limited to smart phones, tablet computers, e-book readers, MP3 (Moving Picture Experts Group Audio Layer III) players, MP4 (Moving Picture Experts Group Audio Layer IV) players, laptop portable computers, desktop computers, and the like. When the terminal devices 601, 602, 603 are software, they can be installed in the electronic devices listed above. They may be implemented as a plurality of software or software modules (e.g., software or software modules used to provide distributed services) or as a single software or software module. It is not particularly limited herein.

The server 605 may be a server that provides various services, for example, receives an information acquisition request sent by the terminal devices 601, 602, 603, and acquires presentation information corresponding to the information acquisition request in various ways according to the information acquisition request. And relevant data of the presentation information is sent to the terminal devices 601, 602, 603.

It should be noted that the login method provided by the embodiment of the present disclosure may be performed by the terminal device, and accordingly, the login apparatus may be provided in the terminal devices 601, 602, 603. In addition, the login method provided by the embodiment of the present disclosure may also be performed by the server 605, and accordingly, the login apparatus may be provided in the server 605.

It should be understood that, the number of terminal devices, networks, and servers in FIG. 6 is merely illustrative. There may be any number of terminal devices, networks, and servers, as desired for an implementation.

Reference is now made to FIG. 7, which illustrates a schematic block diagram of an electronic device (e.g., the terminal device or the server in FIG. 6) suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), a vehicle terminal (e.g., a car navigation terminal), and the like, and a fixed terminal such as a digital TV, a desktop computer, and the like. The electronic device shown in FIG. 7 is only an example, and should not bring any limitation to the functions and the scope of use of the embodiments of the present disclosure.

As shown in FIG. 7, the electronic device may include a processing device (e.g., central processing unit, graphics processor, etc.) 701 that may perform various appropriate actions and processes according to a program stored in a Read Only Memory (ROM) 702 or a program loaded from a storage device 708 into a Random Access Memory (RAM) 703. In the RAM 703, various programs and data necessary for the operation of the electronic device 700 are also stored. The processing device 701, the ROM 702, and the RAM 703 are connected to each other by a bus 704. An input/output (I/O) interface 705 is also connected to the bus 704.

Generally, the following device may be connected to the I/O interface 705: input device 706 including, for example, a touch screen, touch pad, keyboard, mouse, camera, microphone, accelerometer, gyroscope, etc.; an output device 707 including, for example, a Liquid Crystal Display (LCD), a speaker, a vibrator, etc.; the storage device 708, including, for example, magnetic tape, hard disk, etc.; and a communication device 709. The communication device 709 may allow the electronic device to communicate with other devices wirelessly or by wire to exchange data. While FIG. 7 illustrates an electronic device having various devices, it is to be understood that not all illustrated devices are required to be implemented or provided. More or fewer devices may be alternatively implemented or provided.

In particular, the processes described above with reference to the flow diagrams may be implemented as computer software programs, according to the embodiments of the present disclosure. For example, the embodiments of the present disclosure include a computer program product including a computer program carried on a non-transitory computer readable medium, the computer program containing program code for performing the method illustrated by the flow diagrams. In such an embodiment, the computer program may be downloaded and installed from a network via the communication device 709, or may be installed from the storage device 708, or may be installed from the ROM 702. The computer program, when executed by the processing device 701, performs the above-described functions defined in the methods of the embodiments of the present disclosure.

It should be noted that, the computer readable medium of the present disclosure may be a computer readable signal medium or a computer readable storage medium or any combination of the two. The computer readable storage medium may be, for example, but not limited to, an electronic, magnetic, optical, electromagnetic, infrared, or semiconductor system, apparatus, or device, or any combination of the foregoing. More specific examples of the computer readable storage medium may include, but are not limited to: an electrical connection having one or more wires, a portable computer diskette, a hard disk, a Random Access Memory (RAM), a Read-Only Memory (ROM), an Erasable Programmable Read-Only Memory (EPROM or flash memory), an optical fiber, a portable Compact Disc Read-Only Memory (CD-ROM), an optical storage device, a magnetic storage device, or any suitable combination of the foregoing. In the present disclosure, the computer readable storage medium may be any tangible medium that can contain, or store a program for use by or in connection with an instruction execution system, apparatus, or device. In contrast, in the present disclosure, the computer readable signal medium may include a propagated data signal with computer readable program code embodied therein, for example, in baseband or as part of a carrier wave. Such a propagated data signal may take any of a variety of forms, including, but not limited to, electro-magnetic, optical, or any suitable combination thereof. The computer readable signal medium may be any computer readable medium other than the computer readable storage medium, that can communicate, propagate, or transport a program for use by or in connection with an instruction execution system, apparatus, or device. Program code embodied on the computer readable medium may be transmitted using any appropriate medium, including but not limited to: electrical wires, optical cables, RF (radio frequency), etc., or any suitable combination of the foregoing.

In some embodiments, the clients, servers may communicate using any currently known or future developed network protocol, such as HTTP (HyperText Transfer Protocol), and may be interconnected with any form or medium of digital data communication (e.g., a communication network). Examples of communication networks include a local area network ("LAN"), a wide area network ("WAN"), an internet (e.g., the Internet), and peer-to-peer networks (e.g., ad hoc peer-to-peer networks), as well as any currently known or future developed network.

The computer readable medium may be embodied in the electronic device; or may be separate and not assembled into the electronic device.

The computer readable medium carries one or more programs which, when executed by the electronic device, cause the electronic device to: present a login control and demonstration content, wherein the demonstration content is used for demonstrating a login operation corresponding to the login control, and the demonstration content at least matches an image which is displayed when an operation is performed on the login control by using an auxiliary device; and perform, based on an operation on the login control, an operation result of the operation.

Computer program code for carrying out operations of the present disclosure may be written in any combination of one or more programming languages, including but not limited to an object oriented programming language such as Java, Smalltalk, C++, including conventional procedural programming languages, such as the "C" language or similar programming languages. The program code may execute entirely on the user's computer, partly on the user's computer, as a stand-alone software package, partly on the user's computer and partly on a remote computer or entirely on the remote computer or server. In the scenario in which the remote computer is involved, the remote computer may be connected to the user's computer through any type of network, including a Local Area Network (LAN) or a Wide Area Network (WAN), or may be connected to an external computer (for example, through the Internet using an Internet service provider).

The flow and block diagrams in the figures illustrate the architecture, functionality, and operation of possible implementations of systems, methods and computer program products according to various embodiments of the present disclosure. In this regard, each block in the flow or block diagrams may represent a module, program segment, or portion of code, which includes one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in a reverse order, depending upon the functionality involved. It will also be noted that each block of the block diagrams and/or flowchart illustration, and combinations of blocks in the block and/or flow diagrams, can be implemented by special purpose hardware-based systems that perform the specified functions or operations, or combinations of special purpose hardware and computer instructions.

The units described in the embodiments of the present disclosure may be implemented by software or hardware. The name of a unit does not in some cases constitute a limitation on the unit itself, for example, a presenting unit may also be described as a "unit configured to present a login control".

The functions described herein above may be performed, at least in part, by one or more hardware logic components. For example, without limitation, exemplary types of hardware logic components that may be used include: Field Programmable Gate Array (FPGA), Application Specific Integrated Circuit (ASIC), Application Specific Standard Product (ASSP), system on a chip (SOC), Complex Programmable Logic Device (CPLD), and the like.

In the context of this disclosure, the machine-readable medium may be a tangible medium that can contain, or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium would include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

The foregoing description is merely illustration of the preferred embodiments of the present disclosure and the technical principles employed. It should be appreciated by those skilled in the art that the disclosure scope involved in the present disclosure is not limited to the technical solutions formed by specific combinations of the above technical features, but also encompasses other technical solutions formed by arbitrary combinations of the above technical features or equivalent features thereof without departing from the above disclosed concepts, for example, a technical solution formed by performing mutual replacement between the above features and technical features having similar functions to those disclosed (but not limited to) in the present disclosure.

Furthermore, while operations are depicted in a specific order, this should not be understood as requiring that these operations be performed in the specific order shown or in a sequential order. Under certain circumstances, multitasking and parallel processing may be advantageous. Similarly, while several specific implementation details are included in the above discussion, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or method logical actions, it should be understood that the subject matter defined in the attached claims is not necessarily limited to the specific features or actions described above. Rather, the specific features and actions described above are only example forms of implementing the claims.

## Claims

1. A login method, comprising:
presenting a login control and demonstration content, wherein the demonstration content is used for demonstrating a login operation corresponding to the login control, and the demonstration content at least matches an image which is displayed when an operation is performed on the login control by using an auxiliary device; and
performing, based on an operation on the login control, an operation result of the operation.

2. The method according to claim 1, wherein if a login mode corresponding to the login control is scan login, the demonstration content is used for demonstrating a process of triggering a scan login operation based on the login control.

3. The method according to any of claims 1 to 2, wherein if a login mode corresponding to the login control is verification code login, the demonstration content is used for demonstrating a process of performing a verification code login operation based on the login control.

4. The method according to any of claims 1 to 3, wherein the method further comprises:
presenting login entry information, wherein the login entry information corresponds to the login control; and
presenting the login control and the demonstration content comprises:
presenting the login control and the demonstration content corresponding to the login entry information in response to a selection operation on the login entry information.

5. The method according to claim 4, wherein the login entry information is presented on a first interface; and
presenting the login control and the demonstration content in response to the selection operation on the login entry information comprises:
presenting the login control and the demonstration content on a second interface in response to the selection operation on the login entry information.

6. The method according to claim 5, wherein the login entry information comprises an image identification to be scanned; and
the method further comprises:
switching a presentation state of the image identification in response to the selection operation on the login entry information, wherein an interface size occupied by the image identification after the presentation state is switched is larger than an interface size occupied by the image identification before the presentation state is switched.

7. The method according to claim 6, wherein the method further comprises:
presenting first prompt information for the login entry information in response to selecting the login entry information, wherein the first prompt information is used for prompting that performing a selection operation on first login entry information can trigger switching the presentation state of the image identification.

8. The method according to any of claims 4 to 7, wherein presenting the login entry information comprises: presenting at least two login entry information, different login entry information corresponding to different login modes; and
presenting the login control and the demonstration content in response to the selection operation on the login entry information comprises:
presenting, in response to a selection operation on the at least two login entry information, the login control and the demonstration content corresponding to the login entry information selected by the selection operation.

9. The method according to claim 8, wherein the at least two login entry information indicates login modes comprising scan login and verification code login.

10. A login apparatus, comprising:
a presenting unit configured to present a login control and demonstration content, wherein the demonstration content is used for demonstrating a login operation corresponding to the login control, and the demonstration content at least matches an image which is displayed when an operation is performed on the login control by using an auxiliary device; and
a performing unit configured to perform, based on an operation on the login control, an operation result of the operation.

11. An electronic device, comprising:
one or more processors; and
a storage configured to store one or more computer programs which, when executed by the one or more processors, cause the one or more processors to implement the method according to any of claims 1 to 9.

12. A computer-readable medium having thereon stored a computer program which, when executed by a processor, implements the method according to any of claims 1 to 9.

13. A computer program product comprising a computer program which, when executed by a processor, implements the method according to any of claims 1 to 9.

14. A computer program which, when executed by a processor, implements the method according to any of claims 1 to 9.
